# EUROPÄISCHE PATENTSCHRIFT

(11) **EP 3 180 152 B1**
(45) Veröffentlichungstag und Bekanntmachung des Hinweises auf die Patenterteilung: **10.06.2020**
(21) Anmeldenummer: 15742216.3
(22) Anmeldetag: 22.07.2015
(51) Int. Cl.: B23K 20/10, F16B 5/08

(54) **BAUTEILVERBINDUNG UND VERFAHREN ZUM PLASTISCHEN UMFORMEN EINER KUGEL**
COMPONENT CONNECTION AND METHOD FOR THE PLASTIC FORMING OF A BALL
LIAISON D'ÉLÉMENTS STRUCTURAUX ET PROCÉDÉ DE DÉFORMATION PLASTIQUE D'UNE BILLE

(30) Priorität: 13.08.2014 DE 102014216001
(43) Veröffentlichungstag der Anmeldung: 21.06.2017
(73) Patentinhaber: Bayerische Motoren Werke Aktiengesellschaft, 80809 München (DE)
(72) Erfinder: HAMMER, Maik, 84079 Bruckberg (DE); NIEKERK, Johann, 80993 München (DE); STEFANZIOSA, Clemens, 80539 München (DE)
(86) Internationale Anmeldenummer: PCT/EP2015/066757
(87) Internationale Veröffentlichungsnummer: WO 2016/023719

(56) Entgegenhaltungen:
- WO-A2-2011/073393
- DE-A1-102004 025 492
- FR-A1- 2 241 710
- US-A- 4 865 687
- US-A1- 2003 159 274

## Beschreibung

Die vorliegende Erfindung betrifft ein Verfahren zum plastischen Umformen einer Kugel gemäß dem Oberbegriff des Patentanspruches 1 sowie eine Bauteilverbindung gemäß den Merkmalen des Patentanspruches 16.

Ein Verfahren gemäß dem Oberbegriff des Patentanspruches 1 ist aus der US 4 865 687 A bekannt.

Aus der WO 2011 073 393 A2 ist ein Verfahren zum zumindest teilweisen Einbringen eines Propfs in ein Loch bekannt. Zum technischen Hintergrund der Erfindung zählen die DE 10 2014 211 660 A1, FR 2 241 710 A1, US 2003 159 274 A1 sowie die DE 10 2004 025 492 A1.

Zur Verbindung von Bauteilen werden schon seit mehr als 100 Jahren Nieten in verschiedensten Formen und Ausprägungen eingesetzt. Beim Vernieten von Bauteilen wird ein Niet in konzentrisch zueinander ausgerichtete Löcher, die in den miteinander zu verbindenden Bauteilen vorgesehen sind, eingesetzt und durch Aufbringen eines Drucks bzw. einer Kraft plastisch verformt.

Aufgabe der Erfindung ist es, eine Bauteilverbindung zu schaffen, bei der zwei Bauteile in anderer kostengünstiger Weise miteinander verbunden sind. Aufgabe der Erfindung ist es ferner, ein hierfür geeignetes Verfahren anzugeben.

Diese Aufgabe wird durch die Merkmale des Patentanspruches 1 bzw. 16 gelöst. Vorteilhafte Ausgestaltungen und Weiterbildungen der Erfindung sind den Unteransprüchen zu entnehmen.

Ausgangspunkt der Erfindung ist eine Bauteilverbindung mit einem ein Durchgangsloch aufweisenden ersten Bauteil und einem ein Loch aufweisenden zweiten Bauteil. Bei dem in dem zweiten Bauteil vorgesehenen Loch kann es sich ebenfalls um ein Durchgangsloch oder ein bloßes Sackloch handeln. Die Bauteilverbindung weist ferner ein die beiden Bauteile verbindendes "Verbindungselement" auf. Zwischen dem Verbindungselement und mindestens einem der beiden Bauteile besteht ein Formschluss. Ferner kann vorgesehen sein, dass zwischen einem oder beiden Bauteilen und dem Verbindungselement ein Reibschluss besteht. Ferner kann vorgesehen sein, dass zwischen dem Verbindungselement und beiden Bauteilen ein Formschluss und ggf. auch ein Reibschluss besteht.

Der Kern der Erfindung besteht darin, dass das Verbindungselement oder ein Teil des Verbindungselements durch plastisches Ultraschallverformen einer Kugel hergestellt worden ist. "Ausgangsmaterial" des Verbindungselements kann also eine Kugel sein oder ein Teil des Verbindungselements kann zunächst durch eine Kugel gebildet sein. "Ausgangsmaterial muss nicht also notwendigerweise eine bloße Kugel sein. Denkbar ist auch, dass die Kugel Teil eines komplexeren Elements ist (z.B. kann von der Kugel ein Bolzen o.ä. abstehen).

In die Kugel wird mittels einer Ultraschallsonotrode Ultraschallenergie eingebracht, welche die Kugel so stark in Schwingungen versetzt, dass sie zumindest so "weich" wird, dass sie plastisch verformt werden kann. Nach dem plastischen Verformen der Kugel nimmt diese eine Form an, welche das in dem ersten Bauteil vorgesehene Durchgangsloch formschlüssig bzw. nietartig überkragt und sich durch das in dem ersten Bauteil vorgesehene Durchgangsloch in das in dem zweiten Bauteil vorgesehene Durchgangsloch hinein erstreckt. Wie bereits erwähnt, kann zwischen dem aus der Kugel durch Umfomen der Kugel hergestellten Verbindungselement und dem zweiten Bauteil ein Reibschluss entstehen. Sofern es sich bei dem in dem zweiten Bauteil vorgesehenen Loch ebenfalls um ein Durchgangsloch handelt, kann vorgesehen sein, dass sich das plastisch verformte Verbindungselement durch die beiden Löcher hindurch erstreckt und beide Löcher formschlüssig bzw. nietartig überkragt.

Ein wesentlicher Vorteil der Erfindung besteht darin, dass es sich bei Kugeln (unabhängig vom Material der Kugeln) i.d.R. um äußerst preisgünstige Massenware handelt, die "zum Kilopreis" eingekauft werden kann. Die Erfindung ist somit insbesondere für Großserienanwendungen geeignet.

Aufgrund der vollständigen Symmetrie einer Kugel kann diese sehr leicht mittels einer kugelkalottenförmigen Sonotrode "gesetzt" bzw. verformt werden. Eine Kugel kann bspw. mittels einer in die Sonotrode integrierten oder an der Sonotrode angeordneten Ansaugeinrichtung angesaugt, durch Ultraschall "erweicht" und anschließend gesetzt, d.h. verformt werden. Dieser Vorgang kann vollautomatisiert mittels eines Roboters erfolgen.

Die Erfindung kann im Zusammenhang mit unterschiedlichsten Kugelmaterialien angewendet werden. Die Kugel kann bspw. aus einem Kunststoffmaterial bestehen. Alternativ dazu kann die Kugel auch aus einem Metall oder aus einer Legierung bestehen. Die Erfindung ist insbesondere im Zusammenhang mit Aluminiumkugeln, Kupferkugeln oder Stahlkugeln anwendbar.

Auch hinsichtlich der Materialien der beiden Bauteile ist die Erfindung universell einsetzbar. Das erste und/oder das zweite Bauteil kann bspw. aus einem Metall, wie z.B. Stahl oder Aluminium bestehen oder aus Kunststoff, insbesondere aus einem faserverstärkten Kunststoff. Insbesondere kann das erste Bauteil aus einem anderen Material bestehen, als das zweite Bauteil ("Mischbauverbindung").

Bei einem oder beiden Bauteilen kann es sich um Karosseriebauteile eines Fahrzeugs handeln. Die Erfindung ist aber nicht nur im Fahrzeugbau, sondern ganz generell einsetzbar, wenn es darum geht, zwei Bauteile in einfacher und kostengünstiger Weise miteinander zu verbinden.

Mittels einer Sonotrode kann die Kugel in Schwingungen versetzt werden. Denkbar ist bspw., dass die Schwingungsrichtung der Sonotrode parallel zu einer durch die Mittelpunkte der beiden Löcher verlaufenden Achse, d.h. im Wesentlichen senkrecht zu den beiden Bauteilen im Bereich der Löcher ist. Alternativ dazu kann auch mit einer "Drehsonotrode" gearbeitet werden, welche die Kugel in Drehschwingungen ("tordierender Ultraschall") versetzt.

Im Folgenden wird die Erfindung im Zusammenhang mit der Zeichnung näher erläutert. Es zeigen:
- Fig. 1 und 2: ein Ausführungsbeispiel gemäß der Erfindung, bei der zwei Bauteile von zwei Seiten her durch plastisches Verformen einer Kugel miteinander verbunden werden; und
- Fig. 3, 4: ein Ausführungsbeispiel, bei der zwei Bauteile durch einseitiges Verformen einer Kugel miteinander verbunden werden.

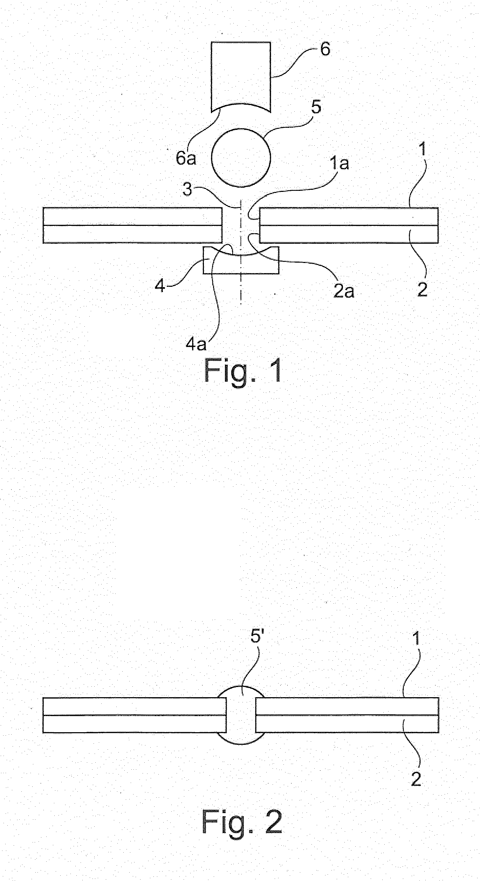

Fig. 1 zeigt zwei aneinander anliegende Bauteile 1, 2. In dem ersten Bauteil 1 ist ein erstes Durchgangsloch 1a vorgesehen. In dem zweiten Bauteil 2 ist ein zweites Durchgangsloch 2a vorgesehen. Die beiden Bauteile 1, 2 sind so aneinander angelegt, dass die beiden Durchgangslöcher 1a, 2a konzentrisch zueinander ausgerichtet sind, was durch die strichpunktiert dargestellte Mittelsenkrechte 3, welche sich durch die Mittelpunkte der beiden Löcher 1a, 2a erstreckt, angedeutet ist.

Von einer Unterseite des Bauteils 2 her wird ein matrizenartiges Werkzeug 4 angesetzt, welches eine muldenartige Ausnehmung bzw. Einbuchtung 4a aufweist.

Von der Seite des ersten Bauteils 1 her wird eine Kugel 5 angesetzt. Bei der in der Fig. 1 dargestellten Anordnung ist der Durchmesser der Kugel 5 größer als der Durchmesser des Durchgangslochs 1a. Die Kugel 5 wird auf das Durchgangsloch 1a aufgesetzt und mittels einer Ultraschallsonotrode 6 in Schwingungen versetzt. Die Ultraschallsonotrode 6 weist eine kugelkalottenförmige Ausnehmung 6a auf, welche von außen her an der Kugel 5 anliegt. Die Kugel 5 kann mittels der Ultraschallsonotrode in Schwingungen versetzt werden, welche parallel zur Achse 3 sind oder, alternativ dazu in Drehschwingungen, welche um die Achse 3 oszillieren. Mittels der Ultraschallsonotrode 6 wird so viel Energie in die Kugel 5 eingebracht, dass diese "weich" wird und sich plastisch verformen lässt. Durch Zusammendrücken der Ultraschallsonotrode 6 und des matrizenartigen Werkzeugs 4 wird die Kugel 5 in die Durchgangslöcher 1a, 2a hinein verformt. Im Bereich der Oberseite des Bauteils 1 und im Bereich der Unterseite des Bauteils 2 verformt sich die Kugel entsprechend der in der Ultraschallsonotrode 6 vorgesehenen kugelkalottenförmigen Ausnehmung 6a bzw. der Ausnehmung 4a des matrizenartigen Werkzeugs. Aus der Kugel 5 entsteht somit ein die beiden Durchgangslöcher 1a, 2a nietartig überkragendes Verbindungselement 5', was in Fig. 2 dargestellt ist.

Das zugrunde liegende Verfahren kann vollautomatisiert mittels eines die Ultraschallsonotrode führenden Roboters durchgeführt werden. Die Kugel 5 kann bspw. aus einem Vorratsbehälter mittels einer in die Sonotrode 6 integrierten oder an der Sonotrode 6 angeordneten Ansaugeinrichtung angesaugt und auf das Durchgangsloch 1a aufgesetzt werden. Ebenfalls robotergesteuert können dann die Sonotrode 6 und das matrizenartige Werkzeug 4 gegeneinander gepresst werden.

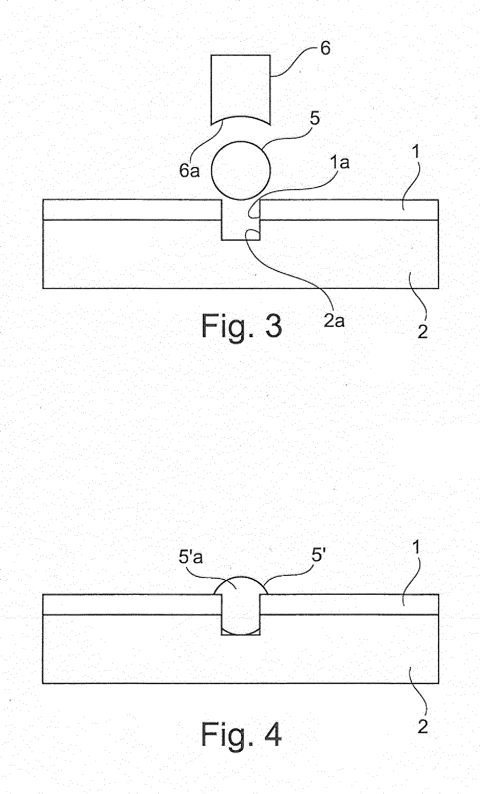

Die Fig. 3, 4 beschreiben ein Ausführungsbeispiel, bei dem zwei Bauteile 1, 2 durch "einseitiges Fügen" miteinander verbunden werden. Auch hier ist in dem ersten Bauteil 1 ein Durchgangsloch1a vorgesehen. Im Unterschied zum Ausführungsbeispiel der Fig. 1, 2 ist im zweiten Bauteil 2 lediglich ein Sackloch vorgesehen.

Ganz analog zum Ausführungsbeispiel der Fig. 1, 2 wird eine Kugel 5 mittels einer Ultraschallsonotrode 6 "aufgeweicht" und durch Anpressen der Ultraschallsonotrode 6 an die Kugel 5 plastisch durch das Durchgangsloch 1a hindurch und in das Sackloch 2a hinein verformt, wodurch sich das in Fig. 4 dargestellte, aus der Kugel 5 entstandene nietartige Verbindungselement 5' ergibt. Das Verbindungselement 5' weist ähnlich wie beim Ausführungsbeispiel der Fig. 1, 2 einen pilz- oder hutartigen Kopf 5'a auf, welcher das in dem ersten Bauteil 1 vorgesehene Durchgangsloch formschlüssig überkragt. Durch Einpressen des Kugelmaterials ergibt sich zwischen dem Verbindungselement 5' und dem zweiten Bauteil 2 bzw. dem darin vorgesehenen Sackloch 2a ein Reibschluss.

## Patentansprüche

1. Verfahren zum plastischen Umformen einer Kugel (5), welche ein Verbindungselement (5') oder einen Teil eines Verbindungselements (5') bildet, das zur Verbindung mindestens zweier Bauteile (1, 2) vorgesehen ist, wobei zumindest ein Teil der zum plastischen Umformen der Kugel (5) erforderlichen Energie mittels Ultraschall in die Kugel (5) eingebracht wird,
**dadurch gekennzeichnet, dass**
die beiden Bauteile (1, 2) jeweils ein Loch (1a, 2a) aufweisen und so zueinander ausgerichtet werden, dass die beiden Bauteile (1a, 2a) aneinander anliegen und die Löcher (1a, 2a) im Wesentlichen oder exakt konzentrisch zueinander angeordnet sind.

2. Verfahren nach Anspruch 1, **dadurch gekennzeichnet, dass** mittels einer Ultraschallsonotrode (6), die unmittelbar an die Kugel (5) angesetzt wird, die Energie in die Kugel (5) eingebracht wird.

3. Verfahren nach einem der Ansprüche 1 oder 2, **dadurch gekennzeichnet, dass** die Kugel (5) aus einem Kunststoffmaterial besteht.

4. Verfahren nach einem der Ansprüche 1 oder 2, **dadurch gekennzeichnet, dass** die Kugel (5) aus einem Metall oder aus einer Legierung besteht.

5. Verfahren nach einem der Ansprüche 1, 2 oder 4, **dadurch gekennzeichnet, dass** die Kugel aus Aluminium oder Kupfer oder Stahl besteht..

6. Verfahren nach einem der Ansprüche 2 bis 5, **dadurch gekennzeichnet, dass** die Kugel (5) mittels der Ultraschallsonotrode (6) in Schwingungen versetzt wird, wobei die Schwingungsrichtung parallel zu einer durch die Mittelpunkte der beiden Löcher (1a, 2a) verlaufenden Achse (3) ist.

7. Verfahren nach einem der Ansprüche 2 bis 7, **dadurch gekennzeichnet, dass** die Kugel (5) mittels der Ultraschallsonotrode (6) in Drehschwingungen versetzt wird.

8. Verfahren nach einem der Ansprüche 1 bis 7, **dadurch gekennzeichnet, dass** die Kugel (5) in die beiden Löcher (1a, 2a) eingebracht oder in die Löcher (1a, 2a) hinein verformt wird, wobei die Kugel (5) nach dem plastischen Verformen mindestens eines der beiden Löcher (1a, 2a) überkragt, wodurch ein Formschluss zwischen dem dadurch entstandenen Verbindungselement (5') und mindestens einem der beiden Bauteile (1, 2) entsteht.

9. Verfahren nach einem der Ansprüche 1 bis 8, **dadurch gekennzeichnet, dass** die Kugel (5) so plastisch verformt wird, dass die Kugel (5) nach dem plastischen Verformen mindestens eines der beiden Löcher (1a, 2a) pilzartig oder nietartig überkragt.

10. Verfahren nach einem der Ansprüche 1 bis 9, **dadurch gekennzeichnet, dass** eines der Löcher ein Durchgangsloch (1a) und das andere Loch ein Sackloch (2a) ist.

11. Verfahren nach Anspruch 10, **dadurch gekennzeichnet, dass** von der Seite des Durchgangslochs (1a) her Ultraschallenergie in die Kugel (5) eingebracht wird.

12. Verfahren nach einem der Ansprüche 1 bis 9, **dadurch gekennzeichnet, dass** beide Löcher (1a, 2a) Durchgangslöcher sind.

13. Verfahren nach einem der Ansprüche 1 bis 9 oder 11 oder 12, **dadurch gekennzeichnet, dass** von einer Seite der Kugel (5) her Ultraschallenergie in die Kugel (5) eingebracht wird und von einer gegenüberliegenden Seite der Kugel (5) mittels eines matrizenartigen Werkzeugs (4) gegengehalten wird, wobei die Kugel (5) in eine Einbuchtung (4a) des matrizenartigen Werkzeugs (4) hinein plastisch verformt wird.

14. Verfahren nach einem der Ansprüche 2 bis 13, **dadurch gekennzeichnet, dass** die Kugel (5) mittels einer in die Ultraschallsonotrode (6) integrierten oder an der Ultraschallsonotrode (6) angeordneten Ansaugeinrichtung in eine Ausnehmung (6a) der Ultraschallsonotrode hinein angesaugt wird.

15. Verfahren nach einem der Ansprüche 2 bis 14, **dadurch gekennzeichnet, dass** die Ultraschallsonotrode mittels eines Roboters geführt und die zum Umformen der Kugel erforderliche Kraft zumindest zu einem Teil von dem Roboter ausgeübt und über die Ultraschallsonotrode auf die Kugel übertragen wird.

16. Bauteilverbindung, welche unter Anwendung eines Verfahrens nach einem der Ansprüche 1 bis 15 hergestellt worden ist, wobei die Bauteilverbindung
- ein ein Durchgangsloch (1a) aufweisendes erstes Bauteil (1), und ein ein Loch (2a) aufweisendes zweiten Bauteil (2) und
- ein die beiden Bauteile verbindendes Verbindungselement (5') aufweist,
**dadurch gekennzeichnet, dass** das Verbindungselement (5') durch plastisches Ultraschallverformen der Kugel (5) hergestellt worden ist, wobei das plastisch verformte Verbindungselement (5')
- das Durchgangsloch (1a) formschlüssig überkragt, und
- sich durch das Durchgangsloch (1a) in das in dem zweiten Bauteil (2) vorgesehene Loch (2a) erstreckt.

## Claims

1. Method for the plastic forming of a ball (5), which forms a connecting element (5') or part of a connecting element (5') which is provided for connecting at least two components (1, 2), wherein at least some of the energy required for the plastic forming of the ball (5) is introduced into the ball (5) by means of ultrasound,
**characterized in that**
the two components (1, 2) each have a hole (1a, 2a) and are oriented in relation to one another in such a way that the two components (1a, 2a) rest against one another and the holes (1a, 2a) are arranged substantially or exactly concentrically in relation to one another.

2. Method according to Claim 1, **characterized in that** the energy is introduced into the ball (5) by means of an ultrasonic sonotrode (6), which is set directly onto the ball (5).

3. Method according to either of Claims 1 and 2, **characterized in that** the ball (5) consists of a plastics material.

4. Method according to either of Claims 1 and 2, **characterized in that** the ball (5) consists of a metal or of an alloy.

5. Method according to one of Claims 1, 2 or 4, **characterized in that** the ball consists of aluminium or copper or steel.

6. Method according to one of Claims 2 to 5, **characterized in that** the ball (5) is made to undergo oscillations by means of the ultrasonic sonotrode (6), wherein the direction of oscillation is parallel to an axis (3) running through the centre points of the two holes (1a, 2a).

7. Method according to one of Claims 2 to 7, **characterized in that** the ball (5) is made to undergo rotary oscillations by means of the ultrasonic sonotrode (6).

8. Method according to one of Claims 1 to 7, **characterized in that** the ball (5) is introduced into the two holes (1a, 2a) or deformed into the holes (1a, 2a), wherein the ball (5) projects over at least one of the two holes (1a, 2a) after the plastic deformation, as a result of which a form fit arises between the connecting element (5') thereby formed and at least one of the two components (1, 2) .

9. Method according to one of Claims 1 to 8, **characterized in that** the ball (5) is plastically deformed in such a way that, after the plastic deformation, the ball (5) projects over at least one of the two holes (1a, 2a) like a mushroom or like a rivet.

10. Method according to one of Claims 1 to 9, **characterized in that** one of the holes is a through-hole (1a) and the other hole is a blind hole (2a).

11. Method according to Claim 10, **characterized in that** ultrasonic energy is introduced into the ball (5) from the side of the through-hole (1a).

12. Method according to one of Claims 1 to 9, **characterized in that** both holes (1a, 2a) are through-holes.

13. Method according to one of Claims 1 to 9 or 11 or 12, **characterized in that** ultrasonic energy is introduced into the ball (5) from one side of the ball (5) and is resisted from an opposing side of the ball (5) by means of a die-like tool (4), wherein the ball (5) is plastically deformed into an indentation (4a) in the die-like tool (4).

14. Method according to one of Claims 2 to 13, **characterized in that** the ball (5) is sucked into a recess (6a) in the ultrasonic sonotrode by means of a suction device which is integrated in the ultrasonic sonotrode (6) or is arranged on the ultrasonic sonotrode (6).

15. Method according to one of Claims 2 to 14, **characterized in that** the ultrasonic sonotrode is guided by means of a robot and the force required for the forming of the ball is exerted at least in part by the robot and is transferred via the ultrasonic sonotrode onto the ball.

16. Component connection which has been produced using a method according to one of Claims 1 to 15, wherein the component connection has
- a first component (1) having a through-hole (1a), and a second component (2) having a hole (2a), and
- a connecting element (5') connecting the two components,
**characterized in that** the connecting element (5') has been produced by ultrasonic plastic deformation of the ball (5), wherein the plastically deformed connecting element (5')
- projects over the through-hole (1a) in a form-fitting manner, and
- extends through the through-hole (1a) into the hole (2a) provided in the second component (2).

## Revendications

1. Procédé de déformation plastique d'une bille (5) qui forme un élément de raccordement (5') ou une partie d'un élément de raccordement (5') destiné à raccorder au moins deux éléments structuraux (1, 2), au moins une partie de l'énergie nécessaire à la déformation plastique de la bille (5) étant introduite dans la bille (5) par ultrasons,
**caractérisé en ce que**
les deux éléments structuraux (1, 2) présentent respectivement un trou (1a, 2a) et sont alignés l'un par rapport à l'autre de telle sorte que les deux éléments structuraux (1a, 2a) sont adjacents et les trous (1a, 2a) sont disposés de manière substantiellement ou exactement concentrique l'un par rapport à l'autre.

2. Procédé selon la revendication 1, **caractérisé en ce que** l'énergie est introduite dans la bille (5) au moyen d'une sonotrode à ultrasons (6) appliquée directement sur la bille (5).

3. Procédé selon l'une quelconque des revendications 1 ou 2, **caractérisé en ce que** la bille (5) est composée d'une matière plastique.

4. Procédé selon l'une quelconque des revendications 1 ou 2, **caractérisé en ce que** la bille (5) est composée d'un métal ou d'un alliage.

5. Procédé selon l'une quelconque des revendications 1, 2 et 4, **caractérisé en ce que** la bille est composée d'aluminium ou de cuivre ou d'acier.

6. Procédé selon l'une quelconque des revendications 2 à 5, **caractérisé en ce que** la bille (5) est amenée à osciller au moyen de la sonotrode à ultrasons (6), la direction des oscillations étant parallèle à un axe (3) passant par les centres des deux trous (1a, 2a).

7. Procédé selon l'une quelconque des revendications 2 à 7, **caractérisé en ce que** la bille (5) est amenée à osciller en rotation au moyen de la sonotrode à ultrasons (6) .

8. Procédé selon l'une quelconque des revendications 1 à 7, **caractérisé en ce que** la bille (5) est introduite dans les deux trous (1a, 2a) ou déformée dans les trous (1a, 2a), la bille (5) faisant saillie depuis au moins l'un des deux trous (1a, 2a) après la déformation plastique de façon à établir une liaison par complémentarité de forme entre l'élément de raccordement (5') ainsi créé et au moins l'un des deux éléments structuraux (1, 2).

9. Procédé selon l'une quelconque des revendications 1 à 8, **caractérisé en ce que** la bille (5) subit une déformation plastique de telle sorte qu'après la déformation plastique, la bille (5) fait saillie à la manière d'un champignon ou d'un rivet depuis au moins l'un des deux trous (1a, 2a).

10. Procédé selon l'une quelconque des revendications 1 à 9, **caractérisé en ce que** l'un des trous est un trou traversant (1a) et l'autre trou est un trou borgne (2a).

11. Procédé selon la revendication 10, **caractérisé en ce que** de l'énergie ultrasonore est introduite dans la bille (5) depuis le côté du trou traversant (1a).

12. Procédé selon l'une quelconque des revendications 1 à 9, **caractérisé en ce que** les deux trous (1a, 2a) sont des trous traversants.

13. Procédé selon l'une quelconque des revendications 1 à 9 ou 11 ou 12, **caractérisé en ce que** de l'énergie ultrasonore est introduite dans la bille (5) depuis un côté de la bille (5) et est contrée depuis un côté opposé de la bille (5) au moyen d'un outil de type matrice (4), la bille (5) subissant une déformation plastique vers l'intérieur d'un creux (4a) de l'outil de type matrice (4) .

14. Procédé selon l'une quelconque des revendications 2 à 13, **caractérisé en ce que** la bille (5) est aspirée au moyen d'un dispositif d'aspiration intégré dans la sonotrode à ultrasons (6) ou disposé sur la sonotrode à ultrasons (6) dans un évidement (6a) de la sonotrode à ultrasons.

15. Procédé selon l'une quelconque des revendications 2 à 14, **caractérisé en ce que** la sonotrode à ultrasons est guidée au moyen d'un robot et la force nécessaire à la déformation de la bille est exercée au moins en partie par le robot et transmise à la bille au moyen de la sonotrode à ultrasons.

16. Raccord d'éléments structuraux fabriqué en utilisant un procédé selon l'une quelconque des revendications 1 à 15, le raccord d'éléments structuraux présentant
- un premier élément structural (1) présentant un trou traversant (1a) et un deuxième élément structural (2) présentant un trou (2a), et
- un élément de raccordement (5') raccordant les deux éléments structuraux,
**caractérisé en ce que** l'élément de raccordement (5') est fabriqué par une déformation plastique de la bille (5) par ultrasons,
dans lequel l'élément de raccordement (5') ayant subi une déformation plastique,
- fait saillie du trou traversant (1a) par complémentarité de forme, et
- s'étend à travers le trou traversant (1a) dans le trou (2a) prévu dans le deuxième élément structural (2).
